(19) Europäisches Patentamt

European Patent Office

Office européen des brevets

(11) **EP 0 700 974 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.⁷: **C09C 1/00**, C09D 5/24, C08K 3/00

(21) Anmeldenummer: **95108954.9**

(22) Anmeldetag: **10.06.1995**

(54) **Leitfähige Pigmentzubereitung**

Conductive pigment preparation

Préparation pigmentaire conductrice

(84) Benannte Vertragsstaaten:
**DE ES FR GB IT**

(30) Priorität: **07.09.1994 DE 4431829**

(43) Veröffentlichungstag der Anmeldung:
**13.03.1996 Patentblatt 1996/11**

(73) Patentinhaber: **MERCK PATENT GmbH
64293 Darmstadt (DE)**

(72) Erfinder:
- **Stahlecker, Otto
  D-64291 Darmstadt (DE)**
- **Höner, Elisabeth
  D-64289 Darmstadt (DE)**
- **Neugebauer, Eva
  D-64289 Darmstadt (DE)**
- **Maisch, Roman, Dr.
  D-64342 Seeheim (DE)**

(56) Entgegenhaltungen:
EP-A- 0 562 329        US-A- 4 017 326
US-A- 4 242 428

- **DATABASE WPI Week 8438 Derwent Publications Ltd., London, GB; AN 84-233714 & JP-A-59 138 277 (TOKUSHU) , 8.August 1984**
- **DATABASE WPI Week 9126 Derwent Publications Ltd., London, GB; AN 91-190556 & JP-A-03 119 334 (TOPPAN PRINTING) , 21.Mai 1991**
- **DATABASE WPI Week 9119 Derwent Publications Ltd., London, GB; AN 91-138058 & JP-A-03 076 764 (DAINIPPON TORYO) , 2.April 1991**
- **DATABASE WPI Week 9013 Derwent Publications Ltd., London, GB; AN 90-094638 & JP-A-02 045 578 (NIPPON PAINT) , 15.Februar 1990**
- **DATABASE WPI Week 8313 Derwent Publications Ltd., London, GB; AN 83-31287K & JP-A-58 030 374 (YAMAMOTO) , 22.Februar 1983**

**Beschreibung**

Die Erfindung betrifft eine, aus mindestens zwei Komponenten bestehende Pigmentzubereitung für leitfähige Beschichtungen und Pigmentierungen mit dekorativer Wirkung.

Für verschiedene Anwendungsbereiche werden heute elektrisch leitfähige Pigmente eingesetzt, mit denen zum Beispiel antistatische Beschichtungen für elektronische Geräte, antistatische Fußbodenbeläge, antistatische Ausrüstungen explosionsgeschützter Räume oder elektrisch leitfähige Grundierungen für das Lackieren von Kunststoffen hergestellt werden können.

Für die Herstellung dunkler, leitfähiger Pigmente werden gegenwärtig Ruß und Graphit und für die Herstellung heller Pigmente mit Nickel beschichteter Graphit, Metallplättchen und Mischoxide, wie zum Beispiel mit Antimon dotiertes Zinndioxid, verwendet. Die genannten Mischoxide können dabei auch auf Trägem, beispielsweise Glimmer oder Bariumsulfat, aufgebracht werden.

Ruß und Graphit können jedoch aufgrund ihrer hohen Lichtabsorption im sichtbaren Spektralbereich nicht für transparente, helle oder farbige Beschichtungen eingesetzt werden. Ein weiteres Problem ist die starke Absorption im IR-Bereich, was zum Beispiel bei Sonneneinstrahlung zu einer vielfach unerwünschten Erwärmung der beschichteten Gegenstände führt.

Die farbliche Eigenschaft der leitfähigen Ruße erfordert daher bei ihrer Anwendung in antistatisch ausgerüsteten Grundierungen von Kunststoffteilen in der Automobilindustrie eine weitere auf den Basislack farblich abgestimmte Zwischenlackierung, die zusätzlich Kosten verursacht.

Die bisher bekannten leitfähigen Pigmente erfüllen die Anforderungen an ihre funktionellen Eigenschaften, die beschichteten oder pigmentierten Materialien elektrisch leitend oder antistatisch auszurüsten, dagegen sind sie aber nicht in der Lage, diesen Materialien eine entsprechende dekorative Wirkung zu verleihen, weil ihnen dekorative Effekte wie z.B. Glanz, Interferenzfarben oder Metallglanz fehlen.

In EP 0 373 575 werden leitfähige plättchenförmige Pigmente beschrieben, die aus einem plättchenförmigen Substrat, das mit einer Metalloxidschicht bedeckt ist, oder einem plättchenförmigen Metalloxid bestehen. Sie sind mit einer elektrisch leitfähige Schicht aus Antimon-dotiertem Zinndioxid überzogen, wobei zur Erhöhung der Leitfähigkeit zwischen der Metalloxidschicht und der leitfähige Schicht eine hydratisierte Siliciumdioxidschicht angeordnet ist. Der spezifische Pulverwiderstand dieses Pigmentes liegt bei 35 bis 40 $\Omega$cm. Das Pigment besitzt eine helle Körperfarbe. Es besitzt zu wenig Glanz für dekorative Anwendungen und zeigt auch keine Interferenzfarben, obwohl die Metalloxidschichten auf einem plättchenförmigen Trägermaterial abgeschieden sind. Der Grund hierfür ist, daß Schichtaufbau, Schichtdicke und Fällungsbedingungen mit dem Ziel einer hohen Leitfähigkeit, nicht aber im Hinblick auf eine dekorative Wirkung, optimiert worden sind. Gleiches gilt für das in DE 40 17 044 beschriebene elektrisch leitfähige Bariumsulfat, das aus kugelförmigem Bariumsulfat als Trägermaterial und Antimon-dotiertem Zinnoxid als leitfähige Schicht besteht. Bedingt durch das Trägermaterial ist aber bei diesem Pigment keine dekorative Wirkung zu erwarten.

Aus US 4,017,326 sind Pigmentzubereitungen bekannt, welche zur Verstärkung der Interferenzfarben in Interferenzpigmenten Zusatzstoffe wie Farbstoffe, Siliciumdioxid oder Graphit enthalten. Keiner der Zusatzstoffe wird zur Erzielung einer bestimmten elektrischen Leitfähigkeit eingesetzt.

US 4,242,428 beschreibt ein Pigmentgemisch aus Perlglanzpigmenten und Silberverbindungen für die Farbfotografie, wobei die Silberverbindungen bei der fotografischen Entwicklung reines Silber ergeben. Dieses Pigmentgemisch wird zur Erhöhung der Farbbrillanz von Farbbildern verwendet.

In der JP 58-030 374 wird ein Gemisch aus Aluminium-Pigmenten mit Effektpigmenten beschrieben, welche zur Reparatur von Aluminium enthaltenden Überzügen eingesetzt werden und einen metallischen Eindruck erzeugen sollen. Diese Mischungen sind nicht elektrisch leitfähig.

Aufgabe der Erfindung ist es, eine Pigmentzubereitung für leitfähige Beschichtungen und Pigmentierungen bereitzustellen, die den beschichteten und pigmentierten Materialien außer leitfähigen bzw. antistatischen Eigenschaften auch eine dekorative Wirkung hinsichtlich Glanz, Interferenzfarben oder Metallglanz verleiht.

Diese Aufgabe wird gemäß der Erfindung gelöst durch eine Pigmentzubereitung, enthalten 50 bis 90 Gew.-% einer Komponente A, die aus einem oder mehreren leitfähigen Pigmenten besteht, welche auf einem plättchenförmigen oder nicht plättchenförmigen, gegebenenfalls mit einem oder mehreren Metalloxiden beschichteten Träger basieren oder trägerfrei sind, wobei die Pigmente mit einer leitfähigen Schicht überzogen sind, die aus einem oder mehreren dotierten Metalloxiden besteht und 10 bis 50 Gew.-% einer Komponente B, die aus einem oder mehreren Effektpigmenten besteht.

Gegenstand der Erfindung sind auch Lacke, Druckfarben, Kunststoffe oder Coatings, welche mit der erfindungsgemäßen Pigmentzubereitung pigmentiert sind.

Unter den leitfähigen Pigmenten der Komponente A versteht man leitfähige Pigmente auf der Basis plättchenförmiger oder nicht plättchenförmiger Trägermaterialien oder leitfähige Pigmente, die trägerfrei sind.

Als plättchenförmige Trägermaterialien werden natürlicher oder synthetischer Glimmer und andere Schichtsilikate, wie Talk, Kaolin oder Sericit, aber auch Glasplättchen eingesetzt. Andererseits kann es sich auch um plättchenförmige Materialien handeln, die gemäß der internationalen Anmeldung WO 93/08237 auf einem endlosen Band hergestellt werden. Sie bestehen aus einer transparenten, anorganischen, plättchenförmigen Matrix, vorzugsweise Siliciumdioxid. Die Matrix wird durch Verfestigung eines flüssigen Precursors auf einem endlosen Band hergestellt. In diese Matrix können noch zusätzliche Inhaltsstoffe eingearbeitet werden.

Als nicht plättchenförmige Trägermaterialien können beispielsweise Bariumsulfat oder Siliziumdioxid verwendet werden.

Diese Trägermaterialien, die gegebenenfalls noch mit einer oder mehreren Schichten von Metalloxiden überzogen sein können, sind mit einer Deckschicht aus dotierten Metalloxiden, Metallen oder anderen leitfähigen Verbindungen versehen.

Unter trägerfreien leitfähigen Pigmenten versteht man leitfähige Pigmente, die allein aus dem leitfähigen Material gebildet werden. Beispiele hierfür sind Antimon- oder Fluor-dotiertes Zinnoxid oder Aluminium-dotiertes Zinkoxid.

Leitfähige Pigmente, die zur Komponente A der erfindungsgemäßen Pigmentzubereitung zu zählen sind, werden als Handelsprodukte vertrieben. Ein Pigment, bestehend aus Bariumsulfat, das mit Antimon-dotiertem Zinnoxid beschichtet ist, wird von Sachtleben Chemie GmbH, Duisburg unter dem Handelsnamen Sacon® P401 angeboten.

Ein leitfähiges Zinn(IV)oxid-Pigment wird unter dem Handelsnamen Tego-Conduct S von der Goldschmidt AG, Duisburg hergestellt. Du Pont vertreibt unter der Bezeichnung Zelec® ECP drei leitfähige Pigmente, die aus unterschiedlichen Kemmaterialien bestehen, die mit einer amorphen Siliziumdioxidschicht und einer leitfähigen Zinn/Antimonschicht umhüllt sind.

Elektrisch leitfähige Glimmerpigmente, die mit Antimon-dotiertem Zinndioxid beschichtet sind, sind im Handel unter der Bezeichnung Minatec® (Produkt von E. MERCK, Darmstadt) erhältlich. Ein unter dem Handelsnamen Minatec® 31 CM vertriebenes Produkt besteht aus Glimmerschuppen, die mit Antimon-dotiertem Zinndioxid beschichtet sind. Unter der Bezeichnung Minatec® 30 CM wird ein leitfähiges Pigment vertrieben, das aus mit Titandioxid beschichtetem Glimmer besteht und als leitfähige Schicht eine mit Antimon dotierte Zinndioxidschicht besitzt.

Als Komponente B der erfindungsgemäßen Pigmentzubereitung werden Pigmente mit einer ausgeprägten dekorativen Wirkung eingesetzt, die auch als Effektpigmente bezeichnet werden. Hierzu gehören Perlglanzpigmente, speziell Interferenzpigmente, Goldglanzpigmente und Metallglanzpigmente, sowie Metalleffektpigmente sowie Aluminium- und Goldbronzepigmente einschließlich Effektpigmenten, die nicht eindeutig den beiden oben genannten Gruppen zugeordnet werden können, wie zum Beispiel die von der BASF AG vertriebenen Paliocrom®-Pigmente.

Für die erfindungsgemäße Pigmentzubereitung sind als Perlglanzpigmente mit Metalloxiden beschichtete Glimmerschuppen, wie sie z.B. aus der US-PS 30 87 828 und der US-PS 30 87 829 bekannt sind, bevorzugt. Als Metalloxide werden dabei sowohl farblose hochbrechende Metalloxide wie insbesondere Titan- und/oder Zirkoniumdioxid verwendet, als auch farbige Metalloxide wie z.B. Chromoxid, Nickeloxid, Kupferoxid, Kobaltoxid und insbesondere Eisenoxide wie z.B. $Fe_2O_3$ oder $Fe_3O_4$ oder Mischungen solcher Metalloxide. Solche Metalloxid/Glimmerpigmente sind unter dem Handelsnamen Afflair® und Iriodin® (hergestellt durch E. Merck, Darmstadt) im Handel erhältlich.

Weiterhin sind für die erfindungsgemäße Pigmentzubereitung als Komponente B auch die in der internationalen Patentanmeldung WO 93/08237 beschriebenen Interferenzpigmente geeignet.

Sie besteht aus einer transparenten, anorganischen, plättchenförmigen Matrix, vorzugsweise Siliciumdioxid, die ein lösliches oder nichtlösliches Farbmittel enthält. Das nichtlösliche Farbmittel ist dabei ein organisches oder anorganisches Pigment, während das lösliche Farbmittel ein farbgebendes Metalloxid oder ein löslicher organischer Farbstoff ist.

Die anorganische Matrix ist mindestens auf einer Seite mit einer oder mehreren dünnen, transparenten oder semitransparenten reflektierenden Schichten aus Metalloxiden oder Metallen belegt. Einzelheiten sind der oben genannten internationalen Anmeldung zu entnehmen.

Diese Perlglanzpigmente gliedern sich in Interferenzpigmente, die aus mit Titandioxid beschichtetem Glimmer bestehen; Goldglanzpigmente, bei denen Glimmer mit Titandioxid und Eisenoxid beschichtet ist und Metallglanzpigmente, die aus Glimmer und Eisenoxid bestehen.

Die erfindungsgemäße Pigmentzubereitung wird durch Mischen der Komponenten A und B nach bekannten Verfahren hergestellt. Die Komponente A ist in der Pigmentformulierung in einem Anteil von 50 bis 90 Gew.-%, bevorzugt 65 bis 75 Gew.-%, enthalten. Der Anteil der Komponente B beträgt 10 bis 50 Gew.-%, bevorzugt 25 bis 35 Gew.-%.

Mit Hilfe der erfindungsgemäßen Pigmentzubereitung können Oberflächen jeglicher Art durch Bedrucken, beispielsweise im Siebdruck, Flexodruck oder Tiefdruck, Lackieren oder Beschichten leitfähig oder antistatisch ausgerüstet werden. Weiterhin können auch Grundierungen für nichtleitende Untergründe wie beispielsweise Holz, Holzfaserplatten, Kunststoffteilen für Fahrzeugkarosserien, Keramik, Glas und anorganische Baustoffe, die elektrostatisch lackiert werden sollen, leitfähig oder elektrostatisch ausgerüstet werden, wobei die Oberflächen und Grundierungen perlglänzend, interferenzfarbig oder metaliglänzend, z.B. Eloxal-Effekte, gestaltet werden können. Durch Zusatz von Buntpigmenten sind zusätzliche Farbgestaltungen möglich.

Derartige leitfähige Grundierungen haben den Vorteil, daß sie farblich gestaltet werden können und ermöglichen damit eine farbliche Abstimmung auf den darüberliegenden Basislack. Hierdurch werden farbliche Schwankungen wie auch nicht gewünschte Wolkeneffekte, zum Beispiel bei der Bandlackierung (OEM) und auch bei Reparaturlackierungen verhindert.

Weiterhin ist es möglich, die leitfähige Grundierung farbmäßig und effektmäßig wie den üblichen Basislack zu gestalten, so daß die Schichtdicke des Basislacks reduziert werden kann. Gegebenenfalls kann auf den Basislack ganz verzichtet werden. In diesem Falle ist auf die Grundierung nur noch der übliche Klarlack aufzubringen.

Die Konzentration der Pigmentzubereitung in zu pigmentierenden System, beispielsweise in einem Lack oder einer Grundierung liegt je nach Verarbeitungsviskosität zwischen 5 und 95 Gew.-%, bevorzugt zwischen 20 und 50 Gew.-%.

Erfindungsgemäß werden aus einem leitfähigen Pigment und verschiedenen Effektpigmenten Pigmentformulierungen mit unterschiedlichen Mischungsverhältnissen hergestellt und in eine Bindemittellösung (Acryl-Melamin-Harz) ohne Zusatz von Lösemitteln eingearbeitet. Die erhaltenen Lacke werden mit einer Rakel auf Lackkarten (Opacity charts der Leneta Co./New Jersey) aufgetragen und nach dem Trocknen der Oberflächenwiderstand und der Glanz der Lackschicht (Trockenschichtdicke 30 µm) bestimmt.

Die Bestimmung des Oberflächenwiderstandes der Lackschichten erfolgt nach DIN-Norm 53596 (Absatz 5.2.1.3), die nicht mehr gültig ist. Die Messung erfolgt mit einer Federzungenelektrode, die federnde Metallzungen besitzt.

Für die Bestimmung des Glanzes werden die Farbkarten mit dem Hunter-Lab-System unter der Meßgeometrie 45°/0° und 22,5°/22,5° über schwarz vermessen und nach der folgenden Formel ausgewertet:

$$\text{Glanzzahl} = \frac{L_{22.5°/22.5°} - L_{45°/0°}}{L_{22.5°/22.5°}} \times 100$$

In Tabelle 1 sind Glanz und Widerstand der Lackierungen gemäß den Beispielen 1 bis 8 und den Vergleichsbeispielen 1 bis 8 dargestellt.

Tabelle 1

| Vergleichsbeispiel | Beispiel | Pigmentzubereitung | Glanz | Widerstand ($\Omega$) |
|---|---|---|---|---|
| - | 1 | 15 % Minatec® 31 CM + 5 % Iriodin 9103 | 18 | $0.9 \times 10^3$ |
| - | 2 | 15 % Minatec® 31 CM + 5 % Iriodin 9520 | 24 | $0.8 \times 10^3$ |
| - | 3 | 10 % Minatec® 31 CM + 5 % Iriodin 9103 | 23 | $27 \times 10^3$ |
| - | 4 | 10 % Minatec® 31 CM + 5 % Iriodin 9520 | 28 | $14 \times 10^3$ |
| - | 5 | 15 % Minatec® 31 CM + 5 % Paliochrom L 2000 | 19 | $0.90 \times 10^3$ |
| - | 6 | 10 % Minatec® 31 CM + 5 % Paliochrom L 2000 | 22 | $19 \times 10^3$ |
| - | 7 | 15 % Minatec® 31 CM + 5 % Aluminium | 25 | $0.93 \times 10^3$ |
| - | 8 | 10 % Minatec® 31 CM+ 5 % Aluminium | 30 | $65 \times 10^3$ |

Tabelle 1 -

| Fortsetzung | | | | |
|---|---|---|---|---|
| Vergleichsbeispiel | Beispiel | Pigmentzubereitung | Glanz | Widerstand ($\Omega$) |
| 1 | - | 15 % Minatec® 31 CM | 8 | $0.50 \times 10^3$ |
| 2 | - | 10 % Minatec® 31 CM | 6 | $2.8 \times 10^3$ |
| 3 | - | 5 % Iriodin® 9103 | 22 | - |
| 4 | - | 5 % Iriodin® 9520 | 28 | - |
| 5 | - | 5 % Paliocrom® L 2000 | 22 | - |
| 6 | - | 5 % Aluminium | 36 | - |
| 7 | - | 15 % Minatec® 30 CM | 5 | $0.45 \times 10^3$ |
| 8 | - | 10 % Minatec® 30 CM | 4 | $4.3 \times 10^3$ |

Folgende Pigmente wurden für die Beispiele und Vergleichsbeispiele eingesetzt:

Minatec® 30 CM (Hersteller: E. MERCK Darmstadt) Glimmer, beschichtet mit Antimon dotiertem Zinnoxid

Minatec® 31 CM (Hersteller: E. MERCK Darmstadt) Glimmer, beschichtet mit Titandioxid und Antimondotiertem Zinnoxid

Iriodin® 9103 (Hersteller: E. MERCK Darmstadt) Glimmer, beschichtet mit Titandioxid

Iriodin® 9520 (Hersteller. E. MERCK Darmstadt) Glimmer, beschichtet mit Eisenoxid

Paliocrom® L 2000 (Hersteller: BASF, Ludwigshafen)

Aluminium, beschichtet mit Eisenoxid

Aluminium Stapa Hydrolac WH 16. n.l. (Hersteller: Eckart)

Die Werte in der Tabelle zeigen, daß die leitfähigen Pigmente Minatec® 30 CM und Minatec® 31 CM einen niedrigen relativen Glanz besitzen (siehe Vergleichsbeispiele 1, 2, 7 und 8). Durch Zugabe eines Effektpigmentes (siehe Beispiel 4) wird der Glanz deutlich erhöht.

Während ein Lack mit 10 % Minatec® 31 CM eine Glanzzahl von 6 besitzt, hat dagegen ein Lack mit 10 % Minatec® 31 CM und 5 % Iriodin® 9520 (Beispiel 4) einen Wert von 28. Diesen Wert besitzt aber auch ein Lack, der nur allein das Effektpigment in einer Konzentration von 5 % enthält.

Andererseits verändert sich die Leitfähigkeit einer Lackschicht mit 15 % Minatec® 31 CM (siehe Vergleichsbeispiel 1) nur unwesentlich, wenn in dem Lack noch zusätzlich 5 % Effektpigment (siehe Beispiel 1) eingearbeitet werden.

Aus diesen Vergleichen wird deutlich, daß das angestrebte Ziel, eine Pigmentzubereitung bereitzustellen, die neben einer ausreichenden Leitfähigkeit den pigmentierten Materialien auch eine dekorative Wirkung verleiht, erreicht wird.

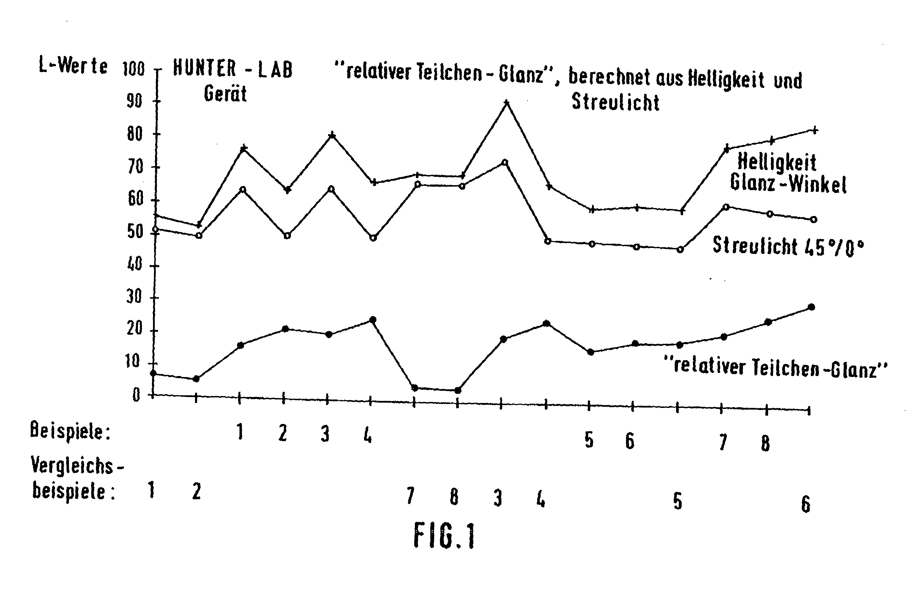

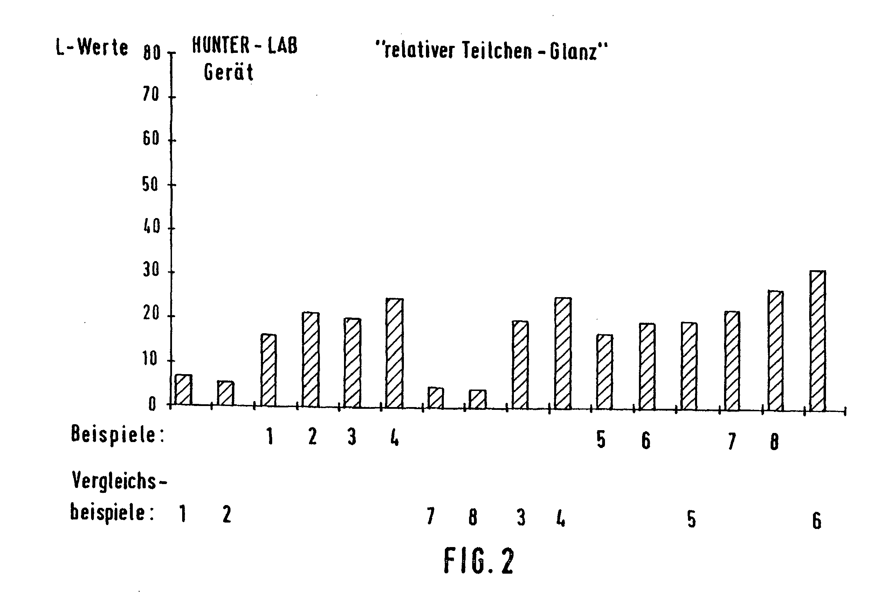

## Patentansprüche

1. Leitfähige Pigmentzubereitung mit dekorativer Wirkung, enthaltend 50 bis 90 Gew.-% einer Komponente A, die aus einem oder mehreren leitfähigen Pigmenten besteht, welche auf einem plättchenförmigen oder nicht plättchenförmigen, gegebenenfalls mit einem oder mehreren Metalloxiden beschichteten Träger basieren oder trägerfrei sind, wobei die Pigmente mit einer leitfähigen Schicht überzogen sind, die aus einem oder mehreren dotierten Metalloxiden besteht und 10 bis 50 Gew.-% einer Komponente B, die aus einem oder mehreren Effektpigmenten besteht.

2. Pigmentzubereitung nach Anspruch 1, **dadurch gekennzeichnet, daß** die Komponente B ein oder mehrere Perlglanzpigmente, Effektglänzpigmente oder Metalleffektpigmente enthält.

3. Pigmentzubereitung nach Anspruch 2, **dadurch gekennzeichnet, daß** das Perlglanzpigment ein Interferenzpigment, ein Goldglanzpigment oder ein Metallglanzpigment ist.

4. Vewendung der Pigmentzubereitung nach mindestens einem der Ansprüche 1 bis 3 zur Pigmentierung von Lacken, Druckfarben, Kunststoffsystemen oder Coatings.

5. Lacke, Druckfarben, Kunststoffsysteme oder Coatings, welche mit einem Pigment nach mindestens einem der Ansprüche 1 bis 3 pigmentiert sind.

## Claims

1. Conductive pigment preparation having a decorative effect and containing 50 to 90% by weight of a component A consisting of one or more conductive pigments which are based on a platelet-shaped or non-platelet-shaped support which, if desired, is coated with one or more metal oxides or are support-free, the pigments being coated with a conductive layer consisting of one or more doped metal oxides, and 10 to 50% by weight of a component B consisting of one or more effect pigments.

2. Pigment preparation according to Claim 1 **characterized in that** component B contains one or more pearl lustre pigments, effect lustre pigments or metallic effect pigments.

3. Pigment preparation according to Claim 2, **characterized in that** the pearl lustre pigment is an interference pigment, a gold lustre pigment or a metallic lustre pigment.

4. Use of the pigment preparation according to at least one of Claims 1 to 3 for pigmenting paints, printing inks, plastic systems or coatings.

5. Paints, printing inks, plastic systems or coatings pigmented with a pigment according to at least one of Claims 1 to 3.


**Revendications**

1. Composition pigmentaire conductrice à effet décoratif, contenant de 50 à 90 % en poids d'un composant A qui consiste en un ou plusieurs pigments conducteurs qui sont sans support ou à base d'un support sous forme de paillettes ou non sous forme de paillettes, éventuellement enrobé d'un ou plusieurs oxydes métalliques, les pigments étant revêtus d'une couche conductrice qui consiste en un ou plusieurs oxydes métalliques dopés, et de 10 à 50 % en poids d'un composant B qui consiste en un ou plusieurs pigments à effet.

2. Composition pigmentaire selon la revendication 1, **caractérisée en ce que** le composant B contient un ou plusieurs pigments nacrés, pigments brillants à effet ou pigments à effet métallique.

3. Composition pigmentaire selon la revendication 2, **caractérisée en ce que** le pigment nacré est un pigment interférentiel, un pigment brillant or ou un pigment brillant métallique.

4. Utilisation de la composition pigmentaire selon au moins l'une des revendications 1 à 3, pour la pigmentation de peintures et vernis, encres d'imprimerie, systèmes de matières plastiques ou revêtements.

5. Peintures et vernis, encres d'imprimerie, systèmes de matières plastiques ou revêtements, qui sont pigmentés avec un pigment selon au moins l'une des revendications 1 à 3.

FIG.1

FIG. 2

EP 0 700 974 B1